# FASCICULE DE BREVET EUROPEEN

(11) **EP 0 726 280 B1**
(45) Date de publication et mention de la délivrance du brevet: **01.12.1999**
(21) Numéro de dépôt: 96200117.8
(22) Date de dépôt: 18.01.1996
(51) Int. Cl.: C08F 279/02, C08F 291/02, C08L 51/04

(54) **Procédé de fabrication d'une composition comprenant un polymère vinylaromatique et un caoutchouc par polymérisation en présence d'un radical libre stable**
Verfahren zur Herstellung einer Zusammensetzung, enthaltend ein vinylaromatisches Polymer und einen Kautschuk, durch Polymerisation in Gegenwart eines stabilen freien Radikals
Process fo the preparation of a composition containing a vinyl-aromatic polymer and a rubber by polymerization in the presence of a stable free radical

(30) Priorité: 07.02.1995 FR 9501380
(43) Date de publication de la demande: 14.08.1996
(73) Titulaire: ELF ATOCHEM S.A., 92800 Puteaux, Hauts-de-Seine (FR)
(72) Inventeur: Nicol, Pascal, F-64000 Pau (FR)

(56) Documents cités:
- FR-A- 2 333 813
- US-A- 3 880 822
- US-A- 4 581 429

## Description

La présente invention concerne un procédé de fabrication d'une composition comprenant un polymère vinylaromatique et un caoutchouc.

Les compositions comprenant un polymère vinylaromatique et un caoutchouc doivent présenter un ensemble de propriétés telles qu'une bonne résistance aux chocs, une brillance adaptée à l'application souhaitée ainsi qu'un indice de fluidité adapté à la technique de transformation envisagée.

Il est utile de pouvoir disposer de moyens permettant d'influencer ces différentes propriétés de façon à mieux les dominer et mieux les adapter à l'application visée.

Il est connu que les compositions comprenant un caoutchouc sous la forme de nodules résistent généralement mieux aux chocs lorsque la distribution des tailles des nodules de caoutchouc est étalée, voire bimodale. Différents procédés ont été proposés pour réaliser ce genre de matériaux. Le brevet EP 48389 enseigne qu'un polystyrène choc à la distribution des nodules bimodale peut être obtenu par fabrication indépendante de deux compositions contenant chacune une population particulière de nodules, puis mélange de ces deux compositions. La demande de brevet EP 418042 enseigne qu'une telle composition peut être obtenue à l'aide d'un seul réacteur de polymérisation grâce à l'usage d'un polybutadiène présentant une distribution des masses moléculaires bimodale.

La demande de brevet WO 94/11412 enseigne que du polystyrène de polydispersité inférieure à 2 et de masse moléculaire moyenne en poids inférieure à 80 000 peut être obtenu lorsque la polymérisation du styrène est effectuée en présence d'un radical libre stable, d'un initiateur de polymérisation et en l'absence de caoutchouc, le rapport molaire du radical libre stable sur l'initiateur de polymérisation étant compris entre 0,4 et 2,5, ce qui correspond à une concentration en initiateur de radical libre stable nettement supérieure à 0,1 % en poids dans le milieu de polymérisation et plus généralement voisine de 1 % en poids dans le milieu de polymérisation.

La présente invention concerne un procédé de fabrication d'une composition comprenant un polymère ou copolymère vinylaromatique et un caoutchouc, ledit procédé comprenant une étape de polymérisation en présence d'au moins un monomère vinylaromatique et au moins un caoutchouc, caractérisé en ce qu'un radical libre stable est présent lors de l'étape de polymérisation à raison d'au moins 10 ppm par rapport au monomère vinylaromatique.

La présence d'un radical libre stable dans le milieu de polymérisation, même en quantité très faible, inférieure à 0,1 % en poids permet d'influencer nettement la taille des nodules de caoutchouc dans la composition finale en augmentant généralement la taille moyenne de ceux-ci et en élargissant la distribution de la taille de ces nodules. Des compositions présentant des distributions nettement bimodales de tailles de nodules peuvent même être obtenues.

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

La famille des radicaux libres stables inclut les composés agissant comme inhibiteurs de polymérisation radicalaire, les radicaux nitroxydes stables c'est-à-dire comprenant le groupement =N-O^{•} tels que les radicaux représentés par les formules suivantes: 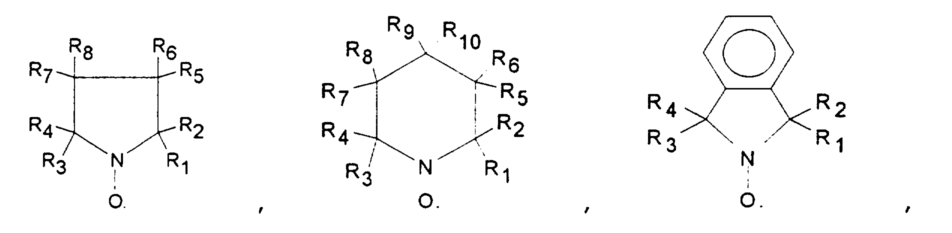 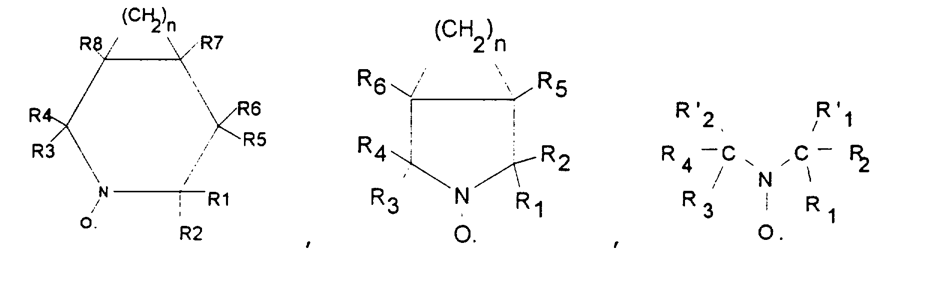 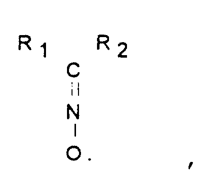 dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphate -PO(OR)₂, ou une chaîne de polymère pouvant par exemple être une chaîne de polyméthacrylate de méthyle, de polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différent, peuvent être choisis dans la même famille de groupement que celle qui vient d'être envisagée pour R1, R2, R3, R4, R'1 et R'2, et de plus peuvent représenter un atome d'hydrogène, un groupement hydroxyde -OH, un groupement acide tel que -COOH ou -PO(OH)₂ ou -SO₃H.

En particulier, le radical libre stable peut être le 2,2,5,5-tétraméthyl-1-pyrrolidinyloxy commercialisé sous la marque PROXYL ou le 2,2,6,6-tetraméthyl-1-piperidinyloxy, généralement commercialisé sous la dénomination TEMPO.

Bien entendu on ne sortirait pas du cadre de la présente invention en introduisant à la place du radical libre stable un initiateur ou générateur de radical libre stable dans les conditions de polymérisation, c'est-à-dire, par exemple, un produit qui ne serait pas un radical libre stable à la température ambiante mais qui serait une source de radical libre stable dès que le milieu destiné à être polymérisé commencerait à être chauffé. De tels composés, comportant des groupements =N-O-X, ont été décrits dans le brevet US 4,581,429. De tels composés génèrent par chauffage aux températures habituelles de polymérisation des radicaux libres stables comportant un groupement =N-O^{•}.

Le radical libre stable est de préférence présent dans le milieu de polymérisation à raison d'au plus 1000 ppm et de manière encore préférée à raison de 10 à 250 ppm, par rapport à la quantité totale de monomère vinylaromatique. Dans le domaine 10 à 1000 ppm, lorsque l'on augmente la concentration en radical libre stable, la distribution des tailles des nodules tend à s'élargir et à passer de monomodale à bimodale, et la fraction volumique de phase caoutchoutique dans la composition finale tend à augmenter. Une distribution est dite bimodale lorsque sa courbe représentant la quantité de nodule en fonction de leur diamètre présente deux maximums. Dans le domaine 10 à 1000 ppm, lorsque l'on augmente la concentration en radical libre stable, la résistance au choc du matériau passe générallement par un maximum, et l'indice de fluidité de la composition finale tend à augmenter. Ce comportement est remarquable car, selon l'art antérieur, ces deux propriétés, résistance aux choc et fluidité, évoluent généralement en sens contraire. Cette caractéristique fait de la composition obtenue par le procédé selon l'invention une composition idéale pour les procédés de moulage par injection destinés à la réalisation de pièces devant posséder une bonne résistance aux chocs. La quantité de radical libre stable pour laquelle
- la distribution passe de monomodale à bimodale,
- ou pour laquelle la résistance au choc du matériau est maximale,
- ou pour laquelle le meilleur ensemble de propriétés, résistance aux chocs et fluidité, compte tenu de l'application envisagée,
est obtenu, peut dépendre de la nature et de la quantité des ingrédients présents à la polymérisation ainsi que des conditions de polymérisation. Grâce à la présente invention, pour des conditions de polymérisation données, l'homme du métier peut trouver par des tests de routine pour quelle concentration en radical libre stable la distribution devient bimodale et pour quelle concentration en radical libre stable la résistance au choc du matériau et sa fluidité sont optimales.

Hormis la présence du radical libre stable, les autres ingrédients mis en oeuvre, ainsi que les conditions de synthèse, sont ceux habituellement utilisés pour la fabrication de compositions comprenant un polymère vinylaromatique et un caoutchouc.

Le procédé selon l'invention, lequel peut fonctionner en continu ou en discontinu, fait intervenir une étape de polymérisation dont le milieu comprend au moins un monomère vinylaromatique, au moins un caoutchouc, au moins un radical libre stable et le cas échéant au moins un solvant.

A titre d'exemple, le milieu destiné à être polymérisé peut comprendre :
- pour 100 parties en poids de monomère vinylaromatique,
- 2 à 35 parties en poids de caoutchouc, et
- 0 à 15 parties en poids de solvant.

Par monomère vinylaromatique, on entend le styrène, le styrène substitué sur le groupement vinyl par un groupement alkyl tel que l'alpha-méthylstyrène ou l'alpha-éthylstyrène, le styrène substitué sur le cycle par un groupement alkyl tel que l'ortho-vinyltoluène, le para-vinyltoluène, l'ortho-éthylstyrène, le 2-4-diméthylstyrène, le styrène substitué sur le cycle par un halogène comme par exemple le 2,4-dichlorostyrène, le styrène substitué à la fois par un halogène et un groupement alkyl tel que le 2-chloro-4-méthylstyrène, ainsi que le vinylanthracène. Le styrène est un monomère vinylaromatique préféré.

Le milieu de polymérisation peut de plus contenir au moins un monomère copolymérisable avec le (ou les) monomère(s) vinylaromatique(s), comme par exemple au moins un monomère acrylique ou méthacrylique.

Par caoutchouc, on entend ceux habituellement utilisés pour améliorer les propriétés chocs des polymères vinylaromatiques. Ce sont habituellement des polydiènes conjugués tels que le polybutadiène, le polyisoprène, les copolymères styrène-butadiène de type élastomère également appelés caoutchouc "SBR" ("styrène-butadière rubber").

Le milieu de polymérisation peut également contenir au moins un solvant organique. Celui-ci est choisi de telle sorte qu'il ne bout pas dans les conditions de polymérisation et de telle sorte qu'il soit miscible avec le monomère vinylaromatique et le polymère vinylaromatique qui en dérive. On peut utiliser les hydrocarbures alicycliques tel que le cyclohexane ou de manière préférée, les aromatiques tels que le toluène, le benzène, l'éthylbenzène ou le xylène.

On peut ajouter au milieu de polymérisation, avant ou au cours de la polymérisation, au moins un adjuvant ou initiateur de polymérisation, habituels à ce genre de préparation. Ces adjuvants peuvent être des plastifiants comme des huiles minérales, le stéarate de butyle ou le phtalate de dioctyle, des stabilisants comme des antioxydants pouvant être le phénol substitué par un groupement alkyl tel que le ditertiobutylparacrésol ou les phosphites tel que le trinonylphénylphosphite.

Si un plastifiant est introduit, celui-ci peut être l'être en quantité telle qu'il soit présent dans la composition finalement synthétisée à raison de 0 à 6% en poids.

Si un stabilisant est introduit, celui-ci peut être présent dans le milieu de polymérisation à raison de 0 à 3000 ppm.

La réaction de polymérisation peut être amorcée thermiquement, sans initiateur de polymérisation ni catalyseur, ou par un initiateur de polymérisation. Si la polymérisation est amorcée thermiquement, elle peut être réalisée entre 100 et 200° C et de préférence entre 110 à 160° C.

Si la polymérisation est amorcée par un initiateur de polymérisation, elle peut être réalisée entre 50 et 200° C et de préférence entre 90 et 160° C. L'initiateur de polymérisation peut être choisi parmi les peroxydes et hydroperoxydes organiques comme le peroxyde de dibenzoyle, le peroxybenzoate de tert-butyle, le 1,1-bis-(tertbutylperoxy)cyclohexane ou les composés azoïques tel que l'azobis-isobutyronitrile.

L'initiateur de polymérisation peut être présent à raison de 50 à 2000 ppm sur la base du ou des monomères vinylaromatiques introduits.

Au cours de la polymérisation se produit le phénomène bien connu d'inversion de phase conduisant à la formation de nodules de caoutchouc dispersés dans une matrice de polymère ou copolymère vinylaromatique. Pendant cette polymérisation, l'agitation doit être suffisante pour que la dispersion des nodules de caoutchouc soit uniforme.

Après polymérisation, il convient de procéder à l'élimination des espèces volatiles comme les monomères n'ayant pas réagi et l'éventuel solvant organique. Ceci peut être réalisé par des techniques conventionnelles comme par l'usage d'un dévolatilisateur fonctionnant à chaud et sous vide.

La teneur finale de la composition selon l'invention en caoutchouc et en polymère ou copolymère vinylaromatique dépend du degré d'avancement de la polymérisation réalisée avant élimination des espèces volatiles. En effet, si le degré d'avancement de la polymérisation est faible, l'élimination des espèces volatiles produira l'élimination d'une forte quantité de monomère vinylaromatique et la teneur finale de la composition en caoutchouc sera plus élevée. De façon à ne pas produire une trop forte réticulation du caoutchouc, il est préférable de ne pas pousser la polymérisation à 100 % des monomères vinylaromatiques.

L'avancement de la polymérisation peut être suivi grâce à des prélèvements effectués au cours de l'étape de polymérisation et par détermination du taux de solide sur les échantillons prélevés. Par taux de solide on entend le pourcentage en poids de solide obtenu après évaporation sous un vide de 25 millibars pendant environ 20 minutes à 200° C des échantillons prélevés par rapport au poids initial de l'échantillon prélevé. On pourra pousser la polymérisation, par exemple jusqu'à l'obtention d'un taux de solide compris entre 60 et 80 % en poids.

Il est préférable d'ajuster les quantités en ingrédients introduits et les conditions de fabrication pour que la composition finale contienne entre 2 et 25 % et de manière encore préférée entre 4 et 15 % de caoutchouc.

Dans les exemples qui suivent, la structure et les propriétés des compositions obtenues ont été déterminées par les techniques suivantes :
- résistance au choc IZOD sur barreau non entaillé : norme 179/1D,
- masse moléculaire du polystyrène : le polystyrène est extrait du polystyrène choc par la méthyléthylcétone et sa masse moléculaire est mesurée par chromatographie par perméation de gel (GPC). Dans le tableau 1, Mw représente la masse moléculaire moyenne en poids du polystyrène, Mn représente la masse moléculaire moyenne en nombre du polystyrène et Mw/Mn représente le rapport de la masse moléculaire moyenne en poids sur la masse moléculaire moyenne en nombre du polystyrène.
- taux de polybutadiène dans les compositions : norme NF T 51-007,
- indice de fluidité : norme ISO 1133,
- taille moyenne des nodules de caoutchouc et distribution des tailles des nodules : granulométrie à sédimentation (capa 700), après mise en solution dans la méthyléthylcétone.

Dans le tableau 1, "mono" sigifie que la distribution des tailles des nodules est monomodale. Dans le tableau 1, "bi" sigifie que la distribution des tailles des nodules est bimodale.

### Exemple 1 (comparatif)

Dans un réacteur en acier inoxydable de 15 litres muni d'un système d'agitation et d'une régulation de température, on introduit à la température ambiante 7360 g de styrène, 160 g d'une huile plastifiante de marque PRIMOL 352 commercialisée par la société ESSO, 8 g d'un antioxydant de marque Irganox 1076 commercialisé par la société CIBA et 480 g d'un polybutadière de marque BR 1202 G commercialisé par la société SHELL, ce dernier produit présentant une masse moléculaire moyenne en poids de 287 000 et une viscosité à 25° C à 5 % en poids dans le styrène de 160 centipoises.

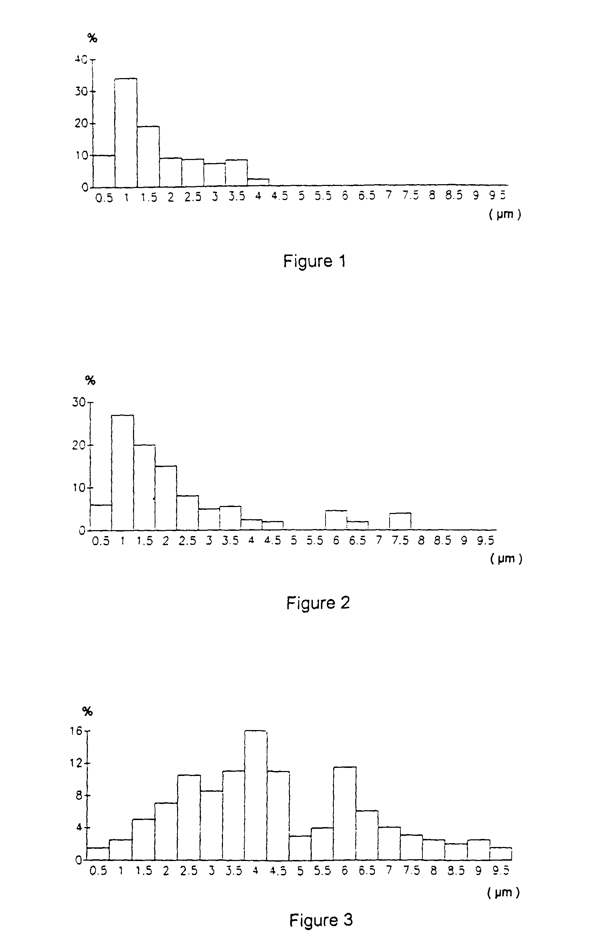

Après solubilisation totale du polybutadiène, la solution est polymérisée thermiquement en montant la température jusqu'à 130° C en 30 min, puis en laissant 1 heure et 30 minutes à cette température, puis en montant la température de 130 à 150° C en 15 minutes et en laissant 55 minutes à 150°C. Le contenu du réacteur est ensuite transféré dans un dévolatilisateur à 210° C sous un vide de 25 millibars environ 10 minutes. Les propriétés de la composition ainsi obtenue sont indiquées dans le tableau 1. La distribution des tailles des nodules est représentée sur la figure 1, exprimée en % en volume de nodules en fonction du diamètre de ces nodules.

### Exemple 2

On procède comme pour l'exemple 1 sauf que l'on ajoute 0,8 g de 2,2,6,6-tetraméthyl-1-piperidinyloxy (TEMPO) juste avant le chauffage. Les propriétés de la composition ainsi obtenue sont indiquées dans le tableau 1. La distribution des tailles des nodules (% en volume) est représentée sur la figure 2.

### Exemple 3

On procède comme pour l'exemple 2 sauf que l'on introduit 2,4 g de TEMPO à la place des 0,8 g.

Les propriétés de la composition ainsi obtenue sont indiquées dans le tableau 1. La distribution des tailles des nodules (% en volume) est représentée sur la figure 3.

### Exemple 4 (comparatif)

On procède comme pour l'exemple 1 mais avec les quantités suivantes des ingrédients :
- Styrène : 7 600 g
- Huile plastifiante PRIMOL 352 : 160 g
- Antioxydant Irganox 1076 : 8 g
- Polybutadiène BR 1202 G : 240 g

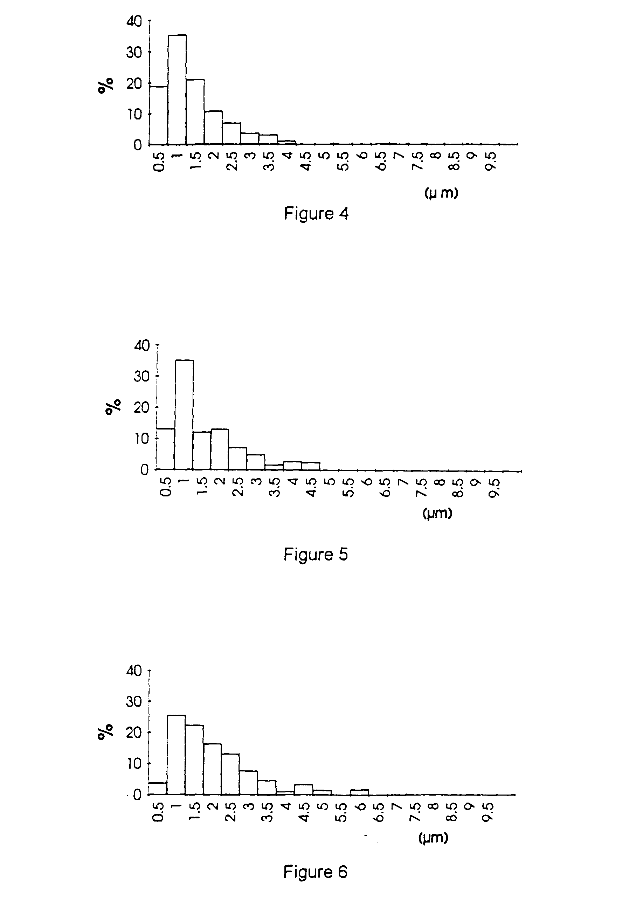

Les propriétés de la composition ainsi obtenue sont indiquées dans le tableau 1. La distribution des tailles des nodules (% en volume) est représentée sur la figure 4.

### Exemple 5

On procède comme pour l'exemple 4 sauf que l'on introduit 0,4 g de TEMPO juste avant le chauffage. Les propriétés de la composition ainsi obtenue sont indiquées dans le tableau 1. La distribution des tailles des nodules (% en volume) est représentée sur la figure 5.

### Exemple 6

On procède comme pour l'exemple 5 sauf que l'on introduit 0,8 g à la place des 0,4 g de TEMPO. Les propriétés de la composition ainsi obtenue sont indiquées dans le tableau 1. La distribution des tailles des nodules (% en volume) est représentée sur la figure 6.

### Exemple 7

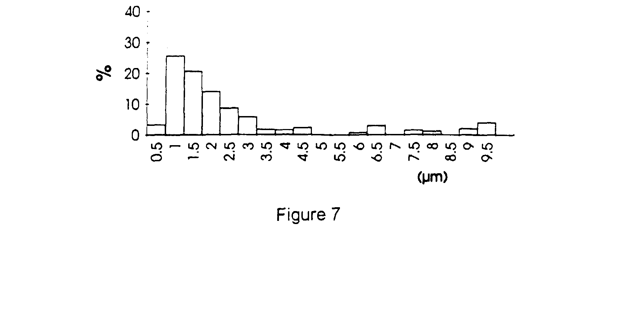

On procède comme pour l'exemple 5 sauf que l'on introduit 1,2 g à la place des 0,4 g de TEMPO. Les propriétés de la composition ainsi obtenue sont indiquées dans le tableau 1. La distribution des tailles des nodules (% en volume) est représentée sur la figure 7.

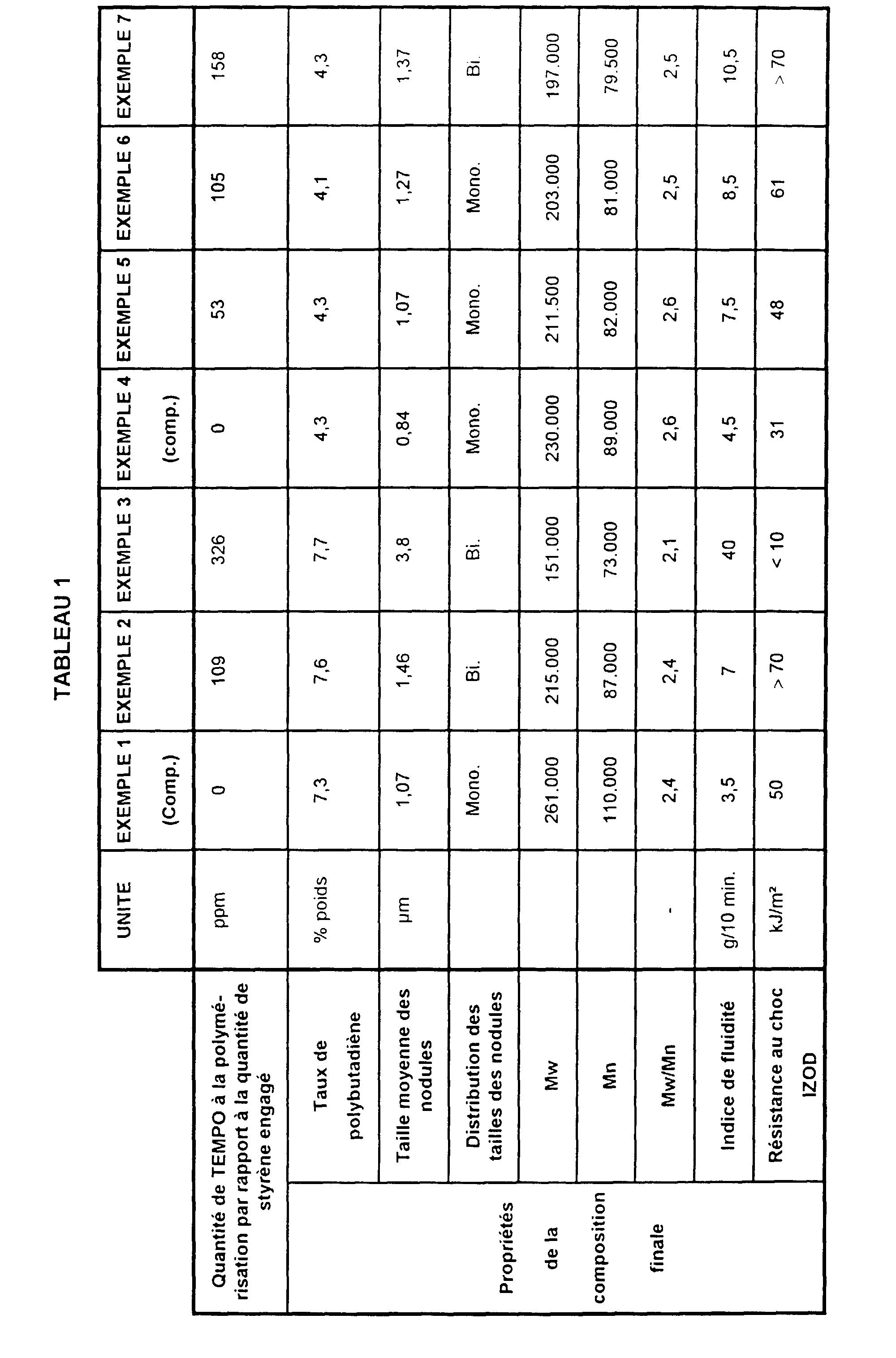

## Revendications

1. Procédé de fabrication d'une composition comprenant un polymère ou copolymère vinylaromatique et un caoutchouc, ledit procédé comprenant une étape de polymérisation en présence d'au moins un monomère vinylaromatique et au moins un caoutchouc, caractérisé en ce qu' un radical libre stable est présent lors de l'étape de polymérisation à raison d'au moins 10 ppm par rapport au monomère vinylaromatique.

2. Procédé selon la revendication 1 caractérisé en ce que le radical libre stable est présent dans le milieu de polymérisation à raison d'au plus 1000 ppm par rapport au monomère vinylaromatique.

3. Procédé selon la revendication 1 ou 2 caractérisé en ce que le radical libre stable est présent dans le milieu de polymérisation à raison de 10 à 250 ppm par rapport au monomère vinylaromatique.

4. Procédé selon l'une des revendications 1 à 3 caractérisé en ce que le radical libre stable comprend un groupement = N-O^{•}

5. Procédé selon l'une des revendications 1 à 4 caractérisé en ce que le milieu de l'étape de polymérisation comprend,
• pour 100 parties en poids de monomère vinylaromatique,
• 2 à 35 parties en poids de caoutchouc, et
• 0 à 15 parties en poids de solvant.

6. Procédé selon la revendication 5 caractérisé en ce que le solvant est l'éthylbenzene.

7. Procédé selon l'une des revendications 1 à 6 caractérisé en ce que le milieu de l'étape de polymérisation comprend un initiateur de polymérisation.

8. Procédé selon la revendication 7 caractérisé en ce que l'initiateur de polymérisation est présent à raison de 50 à 2000 ppm par rapport au monomère vinylaromatique.

9. Procédé selon la revendication 7 ou 8 caractérisé en ce que l'étape de polymérisation est réalisée entre 50 et 200°C, et de préférence entre 90 et 160°C.

10. Procédé selon l'une des revendications 7 à 9 caractérisé en ce que l'initiateur de polymérisation est choisi parmi les peroxydes et hydroperoxydes organiques.

11. Procédé selon l'une des revendications 7 à 10 caractérisé en ce que l'initiateur est le peroxybenzoate de tert-butyle ou le 1,1-bis-(tertbutylperoxy)cyclohexane.

12. Procédé selon l'une des revendications 1 à 6 caractérisé en ce que l'étape de polymérisation est réalisée en l'absence d'initiateur de polymérisation et entre 100 et 200°C, et de préférence entre 110 et 160°C.

13. Procédé selon l'une des revendications 1 à 12 caractérisé en ce que le caoutchouc est un polybutadiène.

14. Procédé selon l'une des revendications 1 à 13 caractérisé en ce que le monomère vinylaromatique est le styrène.

15. Procédé selon l'une des revendications 1 à 14 caractérisé en ce que le radical libre stable est le 2,2,6,6-tetraméthyl-1-piperidinyloxy.

16. Procédé selon l'une des revendications précédentes, caractérisé en ce que la composition comprend une matrice de polymère ou copolymère vinylaromatique dans laquelle des nodules de caoutchouc sont dispersés,

17. Procédé selon la revendication précédente, caractérisé en ce que les nodules de caoutchouc ont une distribution de taille élargie en comparaison avec le même procédé réalisé en l'absence de radical libre stable.

18. Procédé selon l'une des revendications précédentes caractérisé en ce que le caoutchouc est sous la forme de nodules dont la distribution de taille est bimodale.

19. Procédé selon l'une des revendications précédentes caractérisé en ce que la composition contient entre 2 et 25 % de caoutchouc.

20. Procédé selon l'une des revendications précédentes caractérisé en ce que la composition contient entre 4 et 15 % de caoutchouc.

## Claims

1. Process for manufacturing a composition comprising a vinylaromatic polymer or copolymer and a rubber, the said process comprising a step of polymerization in the presence of at least one vinylaromatic monomer and at least one rubber, characterized in that a stable free radical is present during the polymerization step, in a proportion of at least 10 ppm relative to the vinylaromatic monomer.

2. Process according to Claim 1, characterized in that the stable free radical is present in the polymerization medium in a proportion of not more than 1000 ppm relative to the vinylaromatic monomer.

3. Process according to Claim 1 or 2, characterized in that the stable free radical is present in the polymerization medium in a proportion of from 10 to 250 ppm relative to the vinylaromatic monomer.

4. Process according to one of Claims 1 to 3, characterized in that the stable free radical comprises an =N-O^{•} group.

5. Process according to one of Claims 1 to 4, characterized in that the medium for the polymerization step comprises
• per 100 parts by weight of vinylaromatic monomer,
• 2 to 35 parts by weight of rubber, and
• 0 to 15 parts by weight of solvent.

6. Process according to Claim 5, characterized in that the solvent is ethylbenzene.

7. Process according to one of Claims 1 to 6, characterized in that the medium for the polymerization step comprises a polymerization initiator.

8. Process according to Claim 7, characterized in that the polymerization initiator is present in a proportion of from 50 to 2000 ppm relative to the vinylaromatic monomer.

9. Process according to Claim 7 or 8, characterized in that the polymerization step is carried out at between 50 and 200°C, and preferably between 90 and 160°C.

10. Process according to one of Claims 7 to 9, characterized in that the polymerization initiator is chosen from organic peroxides and hydroperoxides.

11. Process according to one of Claims 7 to 10, characterized in that the initiator is tert-butyl peroxybenzoate or 1,1-bis(tert-butylperoxy) cyclohexane.

12. Process according to one of Claims 1 to 6, characterized in that the polymerization step is carried out in the absence of polymerization initiator and at between 100 and 200°C, and preferably at between 110 and 160°C.

13. Process according to one of Claims 1 to 12, characterized in that the rubber is a polybutadiene.

14. Process according to one of Claims 1 to 13, characterized in that the vinylaromatic monomer is styrene.

15. Process according to one of Claims 1 to 14, characterized in that the stable free radical is 2,2,6, 6-tetramethyl-1-piperidyloxy.

16. Process according to one of the preceding claims, characterized in that the composition comprises a vinylaromatic polymer or copolymer matrix in which rubber nodules are dispersed.

17. Process according to the preceding claim, characterized in that the rubber nodules have a broadened size distribution in comparison with the same process carried out in the absence of a stable free radical.

18. Process according to one of the preceding claims, characterized in that the rubber is in the form of nodules whose size distribution is bimodal.

19. Process according to one of the preceding claims, characterized in that the composition contains between 2 and 25% rubber.

20. Process according to one of the preceding claims, characterized in that the composition contains between 4 and 15% rubber.

## Patentansprüche

1. Verfahren zur Herstellung einer Zusammensetzung, die ein vinylaromatisches Polymeres oder Copolymeres und einen Kautschuk enthält, wobei das genannte Verfahren einen Polymerisationsschritt in Gegenwart mindestens eines vinylaromatischen Monomeren und mindestens eines Kautschuks umfaßt, dadurch gekennzeichnet, daß während des Polymerisationsschrittes ein stabiles freies Radikal in einer Menge von mindestens 10 ppm, bezogen auf das vinylaromatische Monomere, vorhanden ist.

2. Verfahren nach Anspruch 1, dadurch gekennzeichnet, daß das stabile freie Radikal im Polymerisationsmilieu in einer Menge von höchstens 1000 ppm, bezogen auf das vinylaromatische Monomere, vorhanden ist.

3. Verfahren nach Anspruch 1 oder 2, dadurch gekennzeichnet, daß das stabile freie Radikal im Polymerisationsmilieu in einer Menge von 10 bis 250 ppm, bezogen auf das vinylaromatische Monomere, vorhanden ist.

4. Verfahren nach einem der Ansprüche 1 bis 3, dadurch gekennzeichnet, daß das stabile freie Radikal eine =N-O^{•} -Gruppe enthält.

5. Verfahren nach einem der Ansprüche 1 bis 4, dadurch gekennzeichnet, daß das Milieu des Polymerisationsschrittes
- auf 100 Gewichtsteile eines vinylaromatischen Monomeren
- 2 bis 35 Gewichtsteile Kautschuk und
- 0 bis 15 Gewichtsteile eines Lösungsmittels enthält.

6. Verfahren nach Anspruch 5, dadurch gekennzeichnet, daß das Lösungsmittel Ethylbenzol ist.

7. Verfahren nach einem der Ansprüche 1 bis 6, dadurch gekennzeichnet, daß das Milieu des Polymerisationsschrittes einen Polymerisationsstarter enthält.

8. Verfahren nach Anspruch 7, dadurch gekennzeichnet, daß der Polymerisationsstarter in einer Menge von 50 bis 2000 ppm, bezogen auf das vinylaromatische Monomere, vorhanden ist.

9. Verfahren nach Anspruch 7 oder 8, dadurch gekennzeichnet, daß der Polymerisationsschritt zwischen 50 und 200 °C, vorzugsweise zwischen 90 und 160 °C, durchgeführt wird.

10. Verfahren nach einem der Ansprüche 7 bis 9, dadurch gekennzeichnet, daß der Polymerisationsstarter aus den organischen Peroxiden und Hydroperoxiden gewählt ist.

11. Verfahren nach einem der Ansprüche 7 bis 10, dadurch gekennzeichnet, daß der Starter *tert*.-Butylperoxybenzoat oder 1,1-Bis(*tert*.butylperoxy)cyclohexan ist.

12. Verfahren nach einem der Ansprüche 1 bis 6, dadurch gekennzeichnet, daß der Polymerisationsschritt ohne den Polymeriationsstarter und zwischen 100 und 200 °C, vorzugsweise zwischen 110 und 160 °C, durchgeführt wird.

13. Verfahren nach einem der Ansprüche 1 bis 12, dadurch gekennzeichnet, daß der Kautschuk ein Polybutadien ist.

14. Verfahren nach einem der Ansprüche 1 bis 13, dadurch gekennzeichnet, daß das vinylaromatische Monomere Styrol ist.

15. Verfahren nach einem der Ansprüche 1 bis 14, dadurch gekennzeichnet, daß das stabile freie Radikal 2,2,6,6-Tetramethyl-1-piperidinyloxy ist.

16. Verfahren nach einem der vorangehenden Ansprüche, dadurch gekennzeichnet, daß die Zusammensetzung eine Matrix aus vinylaromatischen Poymeren oder Copolymeren enthält, in der Kautschukkügelchen dispergiert sind.

17. Verfahren nach dem vorangehenden Anspruch, dadurch gekennzeichnet, daß die Kautschukkügelchen, im Vergleich zu demselben Verfahren ohne ein stabiles freies Radikal, eine brcitere Größenverteilung aufweisen.

18. Verfahren nach einem der vorangehenden Ansprüche, dadurch gekennzeichnet, daß der Kautschuk aus Kugeln besteht, deren Größenverteilung zweigipflig ist.

19. Verfahren nach einem der vorangehenden Ansprüche, dadurch gekennzeichnet, daß die Zusammensetzung 2 bis 25 % Kautschuk enthält.

20. Verfahren nach einem der vorangehenden Ansprüche, dadurch gekennzeichnet, daß die Zusammensetzung 4 bis 15 % Kautschuk enthält.
